Europäisches Patentamt

(19) European Patent Office

Office européen des brevets

(11) Publication number: **0 197 565**

**A1**

(12) # EUROPEAN PATENT APPLICATION

(21) Application number: **86200034.6**

(22) Date of filing: **09.01.86**

(51) Int. Cl.⁴: **A 22 C 29/00**

(30) Priority: **09.01.85 NL 8500045**

(43) Date of publication of application:
**15.10.86 Bulletin 86/42**

(84) Designated Contracting States:
**AT BE CH DE FR GB IT LI LU NL SE**

(71) Applicant: **Kila, Robertus Cornelis**
**Sportlaan 157**
**NL-3135 GT Vlaardingen(NL)**

(72) Inventor: **Kila, Robertus Cornelis**
**Sportlaan 157**
**NL-3135 GT Vlaardingen(NL)**

(72) Inventor: **Stakelbeek, Frank George**
**Buurtweg 23**
**NL-4661 LA Halsteren(NL)**

(74) Representative: **Noz, Franciscus Xaverius, Ir.**
**Boschdijk 155 P.O. Box 645**
**NL-5600 AP Eindhoven(NL)**

(54) Method and device for processing shrimps on board of a fishing boat.

(57) Method and device for processing shrimps on board of a fishing boat whereby the shrimps are boiled, and after boiling and possible sorting or further treatments the shrimps are put, in one or more layers, into a vessel (12) to which steam is first supplied in order to heat the shrimps to ± 80° C after which an sub-atmospheric pressure is generated in the vessel.

EP 0 197 565 A1

./...

Croydon Printing Company Ltd

FIG.1.

-1-

Method and device for processing shrimps on board of a fishing boat.

The invention relates to a method for processing shrimps on board of a fishing boat, whereby the shrimps are boiled.

Usually the shrimps are boiled in sea water immediately after having been caught and then cooled to prepare them for storage. In some cases the shrimps are sorted after having been boiled, whereby after sorting the shrimps are again immersed in boiling water and only then cooled for storage.

Storage thereby takes place at a temperature of ± 7° C or lower, as only at this temperature possible bacterial growth will be neglectable. It is important thereby to cool down the shrimps from the boiling temperature to the low temperature of ± 7° C or lower as soon as possible in order to prevent the growth of bacteria and the like during this cooling period as well as possible. According to the invention this can be achieved in a simple manner in that after boiling and possible sorting or further treatments the shrimps are put, in one or more layers, into a vessel to which first steam is supplied in order to heat the shrimps to ± 80 ° C after which a sub-atmospheric pressure is generated in the vessel.

Said generation of a sub-atmospheric pressure in the vessel will effect a quick evaporation of the water adhering to the shrimps, whereby said evaporating water will extract much heat from the shrimps so that the shrimps can thus be cooled in a short time.

When e.g. a sub-atmospheric pressure of ± 8 Pascal is generated in the vessel an equilibrium will be reached, whereby no further moisture will evaporate, at a temperature of ± 4° C.

According to the invention the method can be effectively executed by means of a device which is provided with a vessel that can be closed, into which shrimps can be put, preferable in several layers located above each other, whilst on the vessel means have been provided for generating a sub-atmospheric pressure in the vessel and means for supplying steam to the vessel.

In this manner a device of a relatively simple construction can be obtained, which can also be operated in a simple manner, so that the device is very suitable for the rough operation at sea and can be operated easily and quickly, also in the worst weather conditions.

The invention will be further explained hereinafter with reference to the accompanying drawings.

Fig 1 shows diagrammatically an installation for executing the method according to the invention.

Fig 2 shows on a larger scale a diagrammatic section of the vessel used in the installation illustrated in fig 1, in which vessel a sub-atmospheric pressure can be generated.

Fig 3 shows diagrammatically and in perspective a tray which can be placed in the container for taking up a layer of shrimps.

Fig 4 shows on a larger scale a corner portion of the tray illustrated in fig 3.

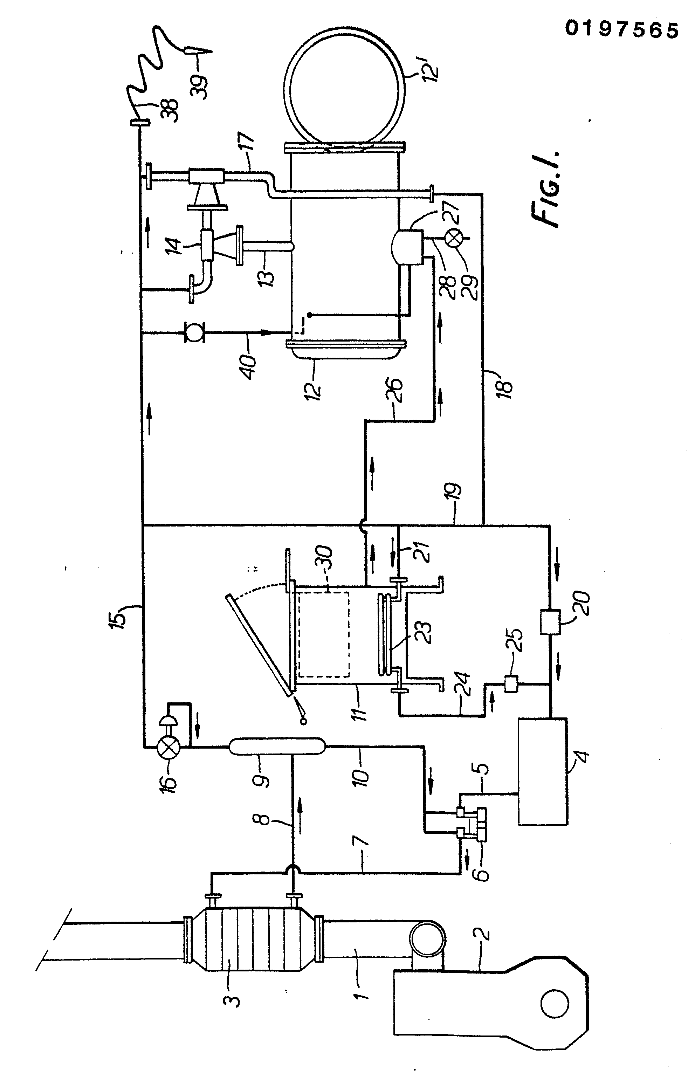

As is diagrammatically illustrated in fig 1 a so-called exhaust gas boiler 3 has been provided in communication with an exhaust pipe 1 of a combustion engine 2, e.g. the propelling engine of the fishing boat. By means of said exhaust gas boiler 3, by using the residual heat present in the exhaust gases of the combustion engine 2, steam can be generated from water.

The water is to be supplied to the exhaust gas boiler 3 from a feed water reservoir 4, which is connected, via a pipe 5, to water pumps 6. The water pumps 6 pump the water, via a pipe 7, into the exhaust gas boiler 3.

Furthermore the exhaust gas boiler 3 is connected, by means of a steam pipe 8, to a water separator 9, which is also connected, via a pipe 10, to the water pumps 6.

Furthermore the installation illustrated in fig 1 comprises a boiler 11 for boiling the shrimps and a vessel 12 for cooling the shrimps. The vessel 12 is provided with a lid 12', which can be closed.

Connected to the upper side of the vessel, via at least one pipe 13, are furthermore one or more steam jet nozzles 14. The steam jet nozzle(s) is connected to the water separator 9 via a pipe 15 in which a shut-off valve 16 has been provided.

Furthermore the steam jet nozzle is connected to an at least substantially vertically extending pipe 17, which is open at its upper end, whilst the pipe 17 is connected at its bottom end to the feed water reservoir, via a pipe 18 and a pipe 19 in which a steam trap 20 is incorporated. The pipe 19 is furthermore connected to the pipe 5 for the possible direct discharge of residual steam from said pipe 15.

Via the pipe 19 and a pipe 21 connected to said pipe 19 the steam supply pipe 15 is also in communication with a steam coil 23 provided in the boiler 11, the discharge end of said coil being connected to the feed water reservoir 4, via a pipe 24, a steam trap 25 and the pipe 19.

As is further illustrated in fig 1 the interior of the boiler 11 is connected, via a pipe 26, to a water container 27 mounted on the bottom side of the vessel 12. Connected to said water container is a discharge pipe 28 with shut-off valve 29 so that it is possible to drain water from the vessel 12 via said discharge pipe 28.

In the boiler a removable perforated basket 30 has furthermore been placed, into which shrimps can be deposited in order to be boiled.

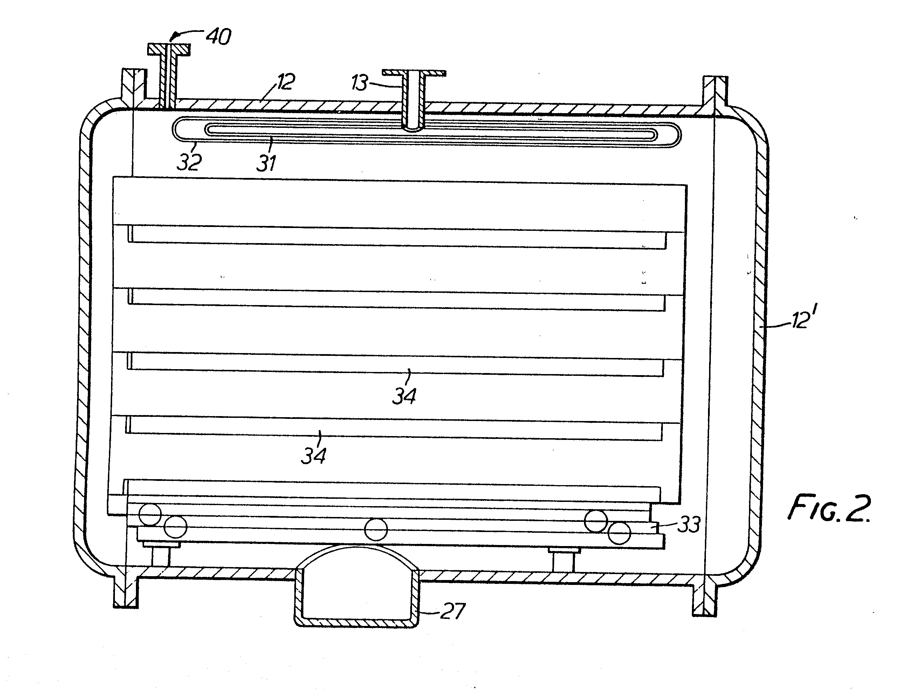

As is further illustrated in fig 2 a pair of loop-shaped pipes 31 and 32, extending into the longitudinal direction of the vessel, are connected to the portions of the pipe 13 that extend into the interior of the vessel 12, said pipes being provided with saw cuts (not shown) in such a manner that steam can be exhausted from the vessel 12 via said saw cuts, the pipes 31 and 32 and the pipe 13.

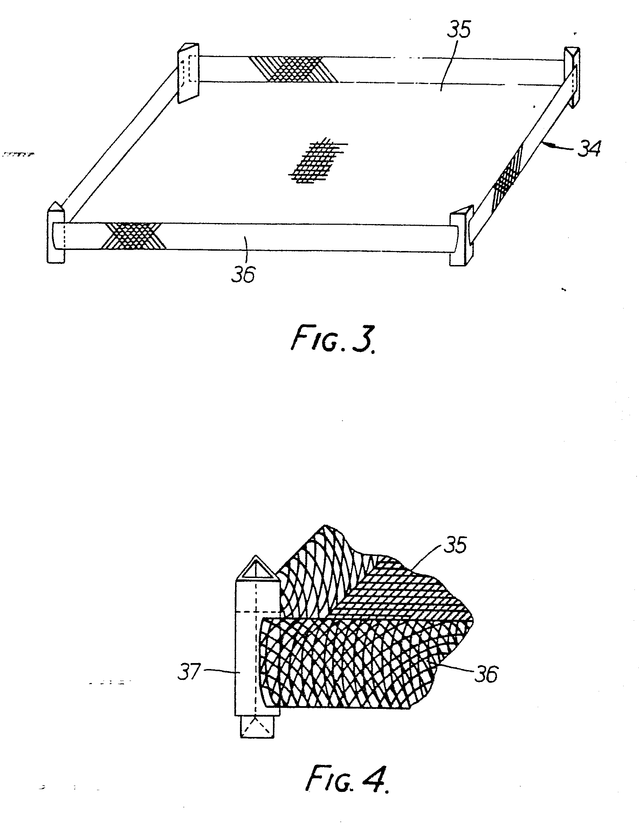

Located in the boiler is a slide 33 which can be moved into and out of the vessel when the lid 12' is open and which serves to support a number of trays 34 located above each other, five trays in the embodiment illustrated. Such a tray is further illustrated in the figs 3 and 4. As is apparent from these figures the bottom 35 and the upright side walls 36 of the trays are made of gauze or grate-shaped material or perforated plate or the like, whilst supporting columns 37 have been provided in the corner points.

It will be apparent that when using the residual heat present in the exhaust gases of the propelling engine, normally lost with fishing boats, steam can be formed in the exhaust gas holder, which steam can be used in the first place for heating the sea water in the boiler 11 to the boiling temperature. In the boiler the shrimps deposited into the basket 30 can be boiled and/or, after cleaning and/or sorting following boiling, heated to boiling temperature again. Then said shrimps are deposited on trays 34, preferable in a layer of ± 7 cm, after which the trays are placed in the vessel 12 in the manner illustrated in fig 2 and the vessel 12 is closed by means of lid 12'. Via a pipe 40, provided with a shut-off valve, which has been provided between the pipe 15 and the vessel 12, steam will now be supplied to the vessel 12 in order to pasteurize the shrimps by heating to ± 80° C. Because of this the usual so-called "hot dip" is no longer necessary. Said steam supply also effects the expulsion of air from vessel 12. By supplying steam to the steam jet nozzle(s) after shutting off the pipe 40 a sub-atmospheric pressure will be generated in the vacuum boiler. As a result of the generation of said sub-atmospheric pressure the moisture adhering to the shrimps will soon be evaporated. The heat of evaporation required for this wil be extracted at least partially from the shrimps, so that a quick cooling of the shrimps can thus be realised. Care must be taken, however, that no moisture is abstracted from the shrimps themselves. In order to prevent this water can be supplied from the boiler to the vessel 12 via the pipe 26, whereby said water then can be sprayed on the shrimps by means of sprinklers (not shown) when the sub-atmoshpheric pressure is shrimps by means of sprinklers not further illustrated when the vacuum is generated in order to prevent undesired desiccation of the shrimps.

By draining the extra water from the boiler in the manner described above practically germ-free water is being used in an advantageous manner for said spraying.

The steam exhausted from the vessel 12 as well as the steam exhausted from the heating coil 23 can be returned to the feed water reservoir to be re-used as feed water for the exhaust gas boiler. Said steam, however, still has a comparatively high temperature, so that the steam can also be used effectively for other purposes, e.g. the heating of living accommodation or the like on board.

A further advantage of the installation described hereinabove is that the steam generated can also be used for other purposes. Thus the installation may be provided with a steam hose 38 with spray nozzle 39 diagrammatically illustrated in fig 1. Such a steam hose can be used well for cleaning parts on board, in particular those parts with which the shrimps will come into contact, which will contribute towards maintaining good sanitary conditions on board.

It will be apparent that when using the construction according to the invention an installation has been obtained that can be operated, produced, in particular because of the practically complete absence of moving parts, and maintained easily, whilst further efficient use is made of the residual heat present in the exhaust gases of the engine, which is usually lost with the fishing boats that have been commom so far. Therefore no extra energy is generally required for operating the installation.

If, however, it must be possible to operate the installation also when the engine in not being used a separate boiler may possibly be provided, by means of which steam can be generated. On board fishing boats, however, this will  generally not be necessary.

-1-

CLAIMS

1.    Method for processing shrimps on board a fishing boat, whereby the shrimps are boiled, characterised in that after boiling and possible sorting or further treatments the shrimps are put, in one or more layers, into a vessel to which first steam is supplied in order to heat the shrimps to ± 80 ° C after which a sub-atmospheric pressure is generated in the vessel.

2.    Method as claimed in claim 1, characterised in that the shrimps are preferably put into the vessel in several layers with a maximum thickness of ± 7 cm.

3.    Device for carrying out the method as claimed in claims 1 or 2, characterised in that the device is provided with a vessel that can be closed into which shrimps can be put, preferably in several layers located above each other, whilst means for generating a sub-atmospheric pressure in the vessel and means for supplying steam to the vessel have been connected to the level.

4.    Device as claimed in claim 3, characterised in that at least on steam jet nozzle for generating a sub-atmospheric pressure has been connected to the vessel.

5.    Device as claimed in claim 4, characterised in that an exhaust gas boiler for generating steam for operating the steam jet nozzle(s) has been connected to the exhaust of a combustion engine present on board the fishing boat.

6.    Device as claimed in claim 5, provided with a boiler for boiling the shrimps, characterised in that a steam coil has been provided in the boiler for heating the water to boiling temperature.

7.        Device as claimed in claim 6, characterised in that the interior or the boiler is connected via a pipe to a water container provided at the bottom side of the vessel.

FIG.I.

0197565

FIG.2.

40

12

13

32  31

12'

34

34

33

27

0197565

0197565

FIG. 3.

FIG. 4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 340 613 (MOORE)<br>* Whole document * | 1-3 | A 22 C 29/00 |
| X | AU-A- 464 080 (A. DONALD)<br><br>* Whole document * | 1,3,4,7 | |
| X | US-A-3 471 894 (TASKER)<br>* Column 2, lines 28-38, 59-65 * | 1,3 | |
| A | PATENTS ABSTRACTS OF JAPAN, vol. 7, no. 102 (M-211) [1247], 30th April 1983; & JP - A - 58 22 795 (MITSUI ZOSEN K.K.) 10-02-1983 | 5,6 | |
| A | US-A-3 513 071 (FEHMERLING)<br>* Claims 2,3 * | 1 | **TECHNICAL FIELDS SEARCHED (Int. Cl.4)** |
| A | US-A-2 978 334 (LAPEYRE) | | A 22 C<br>A 23 B<br>A 23 L |

The present search report has been drawn up for all claims

| Place of search | Date of completion of the search | Examiner |
|---|---|---|
| THE HAGUE | 11-04-1986 | DE LAMEILLIEURE D. |